# EUROPÄISCHE PATENTSCHRIFT

(11) **EP 3 497 524 B1**
(45) Veröffentlichungstag und Bekanntmachung des Hinweises auf die Patenterteilung: **19.01.2022**
(21) Anmeldenummer: 17748562.0
(22) Anmeldetag: 20.07.2017
(51) Int. Cl.: G05B 19/042

(54) **AUTOMATISCHE INITIALISIERUNGSROUTINE IN EINEM AUTOMATISIERUNGS-SYSTEM**
AUTOMATIC INITIALIZATION ROUTINE IN AN AUTOMATION SYSTEM
SOUS-PROGRAMME D'INITIALISATION AUTOMATIQUE DANS UN SYSTEME D'AUTOMATISATION

(30) Priorität: 12.08.2016 DE 102016009857
(43) Veröffentlichungstag der Anmeldung: 19.06.2019
(73) Patentinhaber: WAGO Verwaltungsgesellschaft mit beschränkter Haftung, 32423 Minden (DE)
(72) Erfinder: GORKA, Jürgen, 32425 Minden (DE)
(74) Vertreter: Koplin, Moritz
(86) Internationale Anmeldenummer: PCT/IB2017/000858
(87) Internationale Veröffentlichungsnummer: WO 2018/029518

(56) Entgegenhaltungen:
- EP-A1- 3 001 310
- DE-A1-102004 049 771
- US-A1- 2007 250 180

## Beschreibung

### GEBIET

Die vorliegende Erfindung bezieht sich auf eine automatische Initialisierungsroutine in einem Automatisierungssystem. Insbesondere bezieht sich die vorliegende Erfindung auf eine computerimplementierte Initialisierungsroutine in einem System, welches ein Basismodul und ein erstes und ein zweites Erweiterungsmodul umfasst, die mit dem Basismodul elektrisch und vorzugsweise auch mechanisch lösbar gekoppelt sind, wobei das Basismodul eine Feldbusschnittstelle und die Erweiterungsmodule jeweils eine oder mehrere elektrische Peripherieschnittstellen aufweisen.

### HINTERGRUND

Beim Konfigurieren von Systemen mit einer Vielzahl vernetzter Vorrichtungen wie bspw. Automatisierungssystemen kann es vorkommen, dass das Konfigurieren dadurch erschwert wird, dass der Aufbau bzw. die Topologie der Systeme händisch in ein Konfigurationsprogramm eingegeben werden muss, wobei einerseits dem Eingebenden Fehler unterlaufen können als auch andererseits ein nicht unerheblicher Eingabeaufwand durch den Konfigurierenden betrieben werden muss. Aus der EP 3 001 310 A1 ist dazu ein Verfahren und eine Einrichtung zur Aktualisierung von Firmware für Komponenten einer industriellen Automatisierungsanordnung bekannt, wobei für die Komponenten jeweils eine Anzahl Versionen der jeweiligen Firmware in jeweils unterschiedlichem Ausgabestand verfügbar ist, und wobei Kompatibilitätsbeziehungen zwischen zumindest einigen Versionen der Firmware unterschiedlicher Komponenten gegeben sind. Dabei ist der Einsatz einer Einrichtung zur Aktualisierung der Firmware einiger oder aller Komponenten der industriellen Automatisierungsanordnung vorgesehen, wobei in einem ersten Schritt für eine Anzahl, vorzugsweise alle, Komponenten jeweils mindestens paarweise die Kompatibilitätsbeziehungen zwischen den verschiedenen Versionen der Firmware der jeweils betrachteten Komponenten in einer Speichereinrichtung der Einrichtung gespeichert werden, in einem zweiten Schritt Informationen über die in den Komponenten aktuell verwendeten Versionen der jeweiligen Firmware in einer oder der Speichereinrichtung der Einrichtung gespeichert werden, in einem dritten Schritt anhand der gespeicherten Kompatibilitätsinformationen und der Informationen über die aktuell verwendeten Versionen die zu aktualisierenden Komponenten und die dabei jeweils verwendbaren Versionen der jeweiligen Firmware ermittelt werden, und wobei in einem vierten Schritt die zu aktualisierenden Komponenten automatisch mit Firmware in der jeweils ermittelten Version aktualisiert werden. Dadurch wird der Aktualisierungsprozess weitgehend automatisiert, wobei Inkonsistenzen und daraus resultierende Fehlfunktionen vermieden werden können.

### ZUSAMMENFASSUNG

Die vorliegende Erfindung überwindet diese und weitere Probleme durch ein erfindungsgemäßes Verfahren zum Initialisieren eines (Automatisierungs-) Systems und ein zum automatischen Durchführen des Verfahrens eingerichtetes (bzw. programmiertes) erfindungsgemäßes (Automatisierungs-) System.

Das erfindungsgemäße Verfahren umfasst ein Ausführen einer automatischen Initialisierungsroutine durch das System. Das Ausführen der automatischen Initialisierungsroutine umfasst ein Abfragen eines ersten und eines zweiten Erweiterungsmoduls (durch ein Basismodul des Systems) hinsichtlich Beschreibungsdaten, welche Kenndaten elektrischer Peripherieschnittstellen und eine Identifikation des ersten und des zweiten Erweiterungsmoduls umfassen, ein Speichern einer Datenstruktur (in dem Basismodul), wobei die Datenstruktur die abgefragten Beschreibungsdaten umfasst, und ein Bereitstellen der Datenstruktur an eine Konfigurationseinrichtung (durch das Basismodul).

Das erfindungsgemäße Verfahren umfasst ferner ein Überprüfen ob eines der abgefragten Erweiterungsmodule über eine Peripherieschnittstelle verfügt, welche dazu vorgesehen ist, Datenpakete über eine mit der Peripherieschnittstelle verbundene Datenleitung zu senden und zu empfangen, und, wenn eines der abgefragten Erweiterungsmodule über eine solche Peripherieschnittstelle verfügt, das Abfragen der Peripherieschnittstelle hinsichtlich Geräten, mit denen mittels des Sendens und/oder Empfangens von Datenpaketen über die Peripherieschnittstelle Daten ausgetauscht werden können. Informationen über die Geräte, mit denen mittels des Sendens und/oder Empfangens von Datenpaketen über die Peripherieschnittstelle Daten ausgetauscht werden können, können dann in der Datenstruktur gespeichert und an die Konfigurationseinrichtung übertragen werden.

Als Erweiterungsmodule im Sinne der Erfindung sind dabei insbesondere Vorrichtungen zu verstehen, welche dazu vorgesehen und eingerichtet sind, elektrisch (und vorzugsweise auch mechanisch) lösbar mit dem Basismodul und/oder anderen Erweiterungsmodulen gekoppelt zu werden und dadurch die Anzahl der verfügbaren elektrischen Peripherieschnittstellen und damit die Kapazität des Systems hinsichtlich des Empfangens und/oder Sendens elektrischer Signale (bzw. darin kodierter Daten) zu erhöhen. Als Peripherieschnittstelle wird dabei insbesondere eine solche elektrische Schnittstelle angesehen, die dazu eingerichtet und vorgesehen ist, elektrische Signale oder elektrische Energie an weitere elektrische Geräte zu übertragen, bzw. elektrische Signale oder elektrische Energie von weiteren elektrischen Geräten zu empfangen, bspw. um dadurch das Implementieren einer Automatisierungsfunktionalität zu ermöglichen oder zu unterstützen.

Das Basismodul kann eine zentrale Verarbeitungseinheit, einen Speicher und eine Feldbusschnittstelle aufweisen, wobei die Feldbusschnittstelle dazu eingerichtet sein kann, Daten über eine mit der Feldbusschnittstelle verbundene Datenleitung zu senden und zu empfangen und dadurch Daten mit Netzwerk-Geräten auszutauschen, die mit dem System über den Feldbus verbunden sind. Als Netzwerk-Geräte sind in diesem Zusammenhang jegliche elektrische Geräte zu verstehen, die mit dem Basismodul über die Feldbusschnittstelle Daten austauschen können, dabei aber nicht mit dem Gehäuse des System (mechanisch) fest verbunden sind und mit diesem somit keine mechanische Einheit bilden. Netzwerk-Geräte sind somit elektrische Geräte, die mit dem System im Hinblick auf den Austausch von Daten verbunden sind, zugleich aber in räumlichem Abstand zu dem System angeordnet sind.

Das Basismodul und die Erweiterungsmodule können über ein Bussystem verbunden sein. Das Basismodul kann bspw. ein Buskoppler sein, der mit dem ersten Erweiterungsmodul (z. B. einer ersten Busklemme) und dem zweiten Erweiterungsmodul (z. B. einer zweiten Busklemme) über einen seriellen Kommunikationsbus verbunden ist. Dabei kann der Buskoppler mit den Busklemmen eine (logische) Ringtopologie bilden, wobei der Buskoppler an einem Lokalbus-Ausgang des Buskopplers einen Datenrahmen in den Ring einspeist und diesen an einem Lokalbus-Eingang des Buskopplers nach Durchlaufen des Rings wieder ausliest. Die Busklemmen können dabei nach Empfangen des Datenrahmens an sie adressierte Daten aus dem Datenrahmen auslesen und ihrerseits an den Buskoppler adressierte Daten in den Datenrahmen schreiben (bspw. analog zu Interbus). Die Busklemmen können dazu mit einer zentralen Verarbeitungseinheit und einem (nichtflüchtigen) Speicher versehen sein. Der (nichtflüchtige) Speicher kann ferner die Beschreibungsdaten über die Busklemme umfassen, bspw. in Form von Informationen über die elektrischen Peripherieschnittstellen der Busklemme, wie z. B. die Anzahl analoger Peripherieschnittstellen, die Anzahl digitaler Peripherieschnittstellen, (zulässige) Strom- und Spannungspegelbereiche der Peripherieschnittstellen, etc.

Ferner kann das System einen Energieversorgungsanschluss aufweisen, der eine zwei- oder mehrpolige elektrische Versorgungsschnittstelle umfasst, die dazu eingerichtet und vorgesehen ist, mit einem (bspw. in einem Gebäude installierten und/oder eine Maschine mit Energie versorgenden) Stromnetz elektrisch verbunden zu werden. Die Energieversorgung der Erweiterungsmodule und die Datenkommunikation zwischen dem Basismodul und den Erweiterungsmodulen können bspw. über elektrische Druckkontakte, bspw. Federkontakte oder Messer- und Gabelkontakte realisiert sein, wobei die Messerkontakte eines angereihten zweiten Erweiterungsmoduls mit entsprechenden Feder- oder Gabelkontakten eines ersten Erweiterungsmoduls in Kontakt bzw. Eingriff stehen.

Des Weiteren kann das Abfragen des einen oder der mehreren der Vielzahl an Erweiterungsmodulen hinsichtlich Beschreibungsdaten über die elektrischen Peripherieschnittstellen der jeweiligen Erweiterungsmodule das Übertragen einer Abfragenachricht von dem Basismodul an die Erweiterungsmodule umfassen, wobei das erste und das zweite Erweiterungsmodul in Antwort auf die Abfragenachricht, in dem Speicher des jeweiligen Erweiterungsmoduls gespeicherte Identifikationen und Kenndaten an das Basismodul übertragen. Die Identifikationen können dabei das jeweilige Erweiterungsmodul eindeutig identifizieren, bspw. mittels einer Typenbezeichnung und/oder einer Seriennummer, und die jeweiligen Kenndaten können Informationen über die Peripherieschnittstellen des abgefragten Erweiterungsmoduls umfassen.

Bspw. können die Kenndaten Informationen darüber umfassen, dass ein erstes Erweiterungsmodul eine bestimmte Anzahl an analogen Peripherieschnittstellen und ein zweites Erweiterungsmodul eine bestimmte Anzahl an digitalen Peripherieschnittstellen aufweist. Des Weiteren können die Kenndaten Informationen über eine Adressierung der Peripherieschnittstellen umfassen. Ferner können die Kenndaten Informationen darüber umfassen, dass bspw. ein drittes Erweiterungsmodul eine Peripherieschnittstelle aufweist, über die Daten mit elektrischen Geräten ausgetauscht werden können, die an ein mit der Peripherieschnittstelle verbundenes Datenkabel angeschlossen sind.

Die Datenstruktur kann eine Datei sein, die in dem Speicher des Basismoduls gespeichert wird. Das Bereitstellen der Datenstruktur an die Konfigurationseinrichtung kann ferner über die Feldbusschnittstelle erfolgen, bspw. indem die Feldbusschnittstelle mit der Konfigurationseinrichtung mittels eines Datenkabels oder einer Funkverbindung verbunden ist. Alternativ kann das Bereitstellen der Datenstruktur mittels eines Datenträgers erfolgen, auf dem die Datenstruktur (temporär) zwischengespeichert wird.

Das Verfahren umfasst vorzugsweise ferner ein Ausführen einer Konfigurationsroutine durch die Konfigurationseinrichtung. Die Konfigurationsroutine umfasst ein Festlegen eines oder mehrerer Empfänger von Zustands-Informationen, wobei sich die Zustands-Informationen auf analoge oder digitale Signale beziehen, welche über eine oder mehrere der Peripherieschnittstellen empfangen werden bzw. an einer oder mehreren der Peripherieschnittstellen anliegen. Des Weiteren umfasst die Konfigurationsroutine ein Festlegen eines oder mehrerer Sender von Steuer-Informationen, wobei sich die Steuer-Informationen auf analoge oder digitale Signale beziehen, welche über eine oder mehrere der Peripherieschnittstellen zu senden bzw. an eine oder mehrere der Peripherieschnittstellen anzulegen sind.

Als Zustands-Informationen werden in diesem Zusammenhang insbesondere solche Informationen angesehen, die die analogen oder digitalen Signale beschreiben, welche über eine oder mehrere der Peripherieschnittstellen empfangen werden bzw. an einer oder mehreren der Peripherieschnittstellen zu einem gegebenen Zeitpunkt oder während einer gegebenen Zeitdauer anliegen. Ferner werden als Steuer-Informationen in diesem Zusammenhang insbesondere solche Informationen angesehen, die die analogen oder digitalen Signale beschreiben, welche über eine oder mehrere der Peripherieschnittstellen zu senden bzw. an eine oder mehrere der Peripherieschnittstellen zu einem gegebenen Zeitpunkt oder während einer gegebenen Zeitdauer anzulegen sind.

Der eine oder die mehreren Empfänger von Zustands-Informationen und der eine oder die mehreren Sender von Steuer-Informationen können das Basismodul, eines oder mehrere der Erweiterungsmodule oder eines oder mehrere der Netzwerk-Geräte, mit denen über die Feldbusschnittstelle Daten ausgetauscht werden können, sein bzw. umfassen. Ferner können die Erweiterungsmodule die Zustands-Informationen an elektrische Geräte weiterleiten, die an ein mit der Peripherieschnittstelle verbundenes Datenkabel angeschlossen sind, und die Steuer-Informationen von elektrischen Geräten empfangen, die an das mit der Peripherieschnittstelle verbundene Datenkabel angeschlossen sind.

Vorzugsweise umfasst das Verfahren ferner ein Ausführen einer Betriebsroutine durch das System. Die Betriebsroutine umfasst ein Senden der Zustands-Informationen an den einen oder die mehreren festgelegten Empfänger, ein Empfangen der Steuer-Informationen von dem einen oder den mehreren festgelegten Sendern und ein Steuern von Strom- und/oder Spannungspegeln, welche an einer oder mehreren der Peripherieschnittstellen anliegen, auf Basis der Steuer-Informationen.

Vorzugsweise umfasst das Verfahren ferner ein Abfragen eines Netzwerks, mit dem das System bspw. über die Feldbusschnittstelle verbunden ist, hinsichtlich Netzwerk-Geräten, mit denen das System mittels eines Sendens und Empfangens von Datenpaketen Daten austauschen kann, und ein Identifizieren, mittels des Sendens und/oder Empfangens von Datenpaketen, eines der Netzwerk-Geräte als die Konfigurationseinrichtung, wobei das Bereitstellen der Datenstruktur an die Konfigurationseinrichtung ein Übertragen der Datenstruktur an die Konfigurationseinrichtung mittels des Sendens von Datenpaketen an die Konfigurationseinrichtung umfasst.

Beispielsweise kann das System dazu eingerichtet sein, nach dem Speichern der Datenstruktur die Konfigurationseinrichtung zu suchen, bspw. indem das System dazu eingerichtet ist, eine Konfigurationsdaten-Bereitstellungsnachricht an eine Vielzahl an Netzwerk-Geräten zu senden und in Antwort auf eine Konfigurationsdaten-Anforderungsnachricht der Konfigurationseinrichtung die Datenstruktur an die Konfigurationseinrichtung zu übertragen.

Vorzugsweise umfassen die Geräte-Informationen eindeutige Identifikationen und/oder Adressen der Geräte und/oder Informationen über digitale und/oder analoge Peripherieschnittstellen der Geräte.

Bspw. können die Geräte-Informationen Typbezeichnungen, Seriennummern, MAC-Adressen (Media-Access-Control-Adressen) und/oder IP-Adressen der Geräte umfassen. Ferner können die Geräte-Informationen Informationen darüber umfassen, dass ein erstes Gerät eine erste Anzahl an analogen Peripherieschnittstellen und ein zweites Erweiterungsmodul eine Anzahl an digitalen Peripherieschnittstellen aufweist. Des Weiteren können die Geräte-Informationen Informationen über eine Adressierung der Peripherieschnittstellen umfassen, über die mittels des Sendens und/oder Empfangens von Datenpaketen Daten ausgetauscht werden können.

Vorzugsweise sind das Basismodul und das erste und das zweite Erweiterungsmodul über ein Bussystem verbunden und die abgefragten Beschreibungsdaten umfassen Adressen des ersten und des zweiten Erweiterungsmoduls.

Bspw. können die Beschreibungsdaten physikalische Positionen der Erweiterungsmodule in der (logischen) Ringtopologie umfassen, wodurch sich die Erweiterungsmodule beim Datenaustausch mit dem Basismodul adressieren lassen.

Das erfindungsgemäße System umfasst ein Basismodul, welches eine zentrale Verarbeitungseinheit, einen Speicher und eine Feldbusschnittstelle aufweist, und ein erstes und ein zweites Erweiterungsmodul, die mit dem Basismodul mechanisch und elektrisch lösbar gekoppelt sind und jeweils eine oder mehrere elektrische Peripherieschnittstellen aufweisen.

Das erfindungsgemäße System ist dazu eingerichtet, eine Initialisierungsroutine durchzuführen und im Rahmen der Initialisierungsroutine das erste und das zweite Erweiterungsmodul hinsichtlich Beschreibungsdaten abzufragen, wobei die Beschreibungsdaten Kenndaten der elektrischen Peripherieschnittstellen und eine Identifikation des ersten und des zweiten Erweiterungsmoduls umfassen, eine Datenstruktur, welche die abgefragten Beschreibungsdaten umfasst, zu speichern und die Datenstruktur einer Konfigurationseinrichtung bereitzustellen.

Das System erfindungsgemäße System ist ferner dazu eingerichtet, zu überprüfen, ob eines der abgefragten Erweiterungsmodule über eine Peripherieschnittstelle verfügt, welche dazu eingerichtet und vorgesehen ist, Datenpakete über eine mit der Peripherieschnittstelle verbundene Datenleitung zu senden und zu empfangen, und, wenn eines der abgefragten Erweiterungsmodule über eine Peripherieschnittstelle verfügt, welche dazu eingerichtet und vorgesehen ist, Datenpakete über eine mit der Peripherieschnittstelle verbundene Datenleitung zu senden und zu empfangen, die Peripherieschnittstelle hinsichtlich Geräten abzufragen, mit denen mittels des Sendens und/oder Empfangens von Datenpaketen über die Peripherieschnittstelle Daten ausgetauscht werden können, und Geräte-Informationen über die Geräte, mit denen mittels des Sendens und/oder Empfangens von Datenpaketen über die Peripherieschnittstelle Daten ausgetauscht werden können, in der Datenstruktur zu speichern.

Vorzugsweise ist das System ferner dazu eingerichtet, im Betrieb Datenpakete über eine mit der Feldbusschnittstelle verbundene Datenleitung zu senden und zu empfangen, Zustands-Informationen hinsichtlich an einer oder mehreren der Peripherieschnittstellen empfangener analoger oder digitaler Signale an einen oder mehrere Empfänger zu senden und an einer oder mehreren der Peripherieschnittstellen anliegende Strom- und/oder Spannungspegel auf Basis empfangener Steuer-Informationen zu steuern.

Vorzugsweise ist das System ferner dazu eingerichtet, Informationen über den einen oder die mehreren Empfänger der Zustands-Informationen von der Konfigurationseinrichtung zu empfangen.

Vorzugsweise ist das System ferner dazu eingerichtet, ein Netzwerk hinsichtlich Netzwerk-Geräten, mit denen das System mittels des Sendens und/oder Empfangens von Datenpaketen Daten austauschen kann, abzufragen, eines der Netzwerk-Geräte als die Konfigurationseinrichtung zu identifizieren und die Datenstruktur mittels an die Konfigurationseinrichtung gesendeter Datenpakete an die Konfigurationseinrichtung zu übertragen.

Vorzugsweise umfassen die Geräte-Informationen eindeutige Identifikationen und/oder Adressen der Geräte.

Vorzugsweise sind das Basismodul und das erste und das zweite Erweiterungsmodul über ein Bussystem verbunden und die abgefragten Beschreibungsdaten umfassen Adressen der Erweiterungsmodule oder Positionen der Erweiterungsmodule in einer (logischen) Ringtopologie, welche von dem Basismodul und den Erweiterungsmodulen gebildet wird.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1 ein System gemäß einem Ausführungsbeispiel des erfindungsgemäßen Systems;
Fig. 2 ein erstes Erweiterungsmodul des in Fig. 1 gezeigten Systems;
Fig. 3 ein zweites Erweiterungsmodul des in Fig. 1 gezeigten Systems;
Fig. 4 ein drittes Erweiterungsmodul des in Fig. 1 gezeigten Systems;
Fig. 5 ein Abschlussmodul des in Fig. 1 gezeigten Systems; und
Fig. 6 ein Flussdiagramm eines Verfahrens zum in Betrieb nehmen des in Fig. 1 gezeigten Systems gemäß einem Ausführungsbeispiel des erfindungsgemäßen Verfahrens zeigt.

Dabei sind in den Zeichnungen gleiche oder analoge Elemente durch identische Bezugszeichen gekennzeichnet.

### DETAILLIERTE BESCHREIBUNG

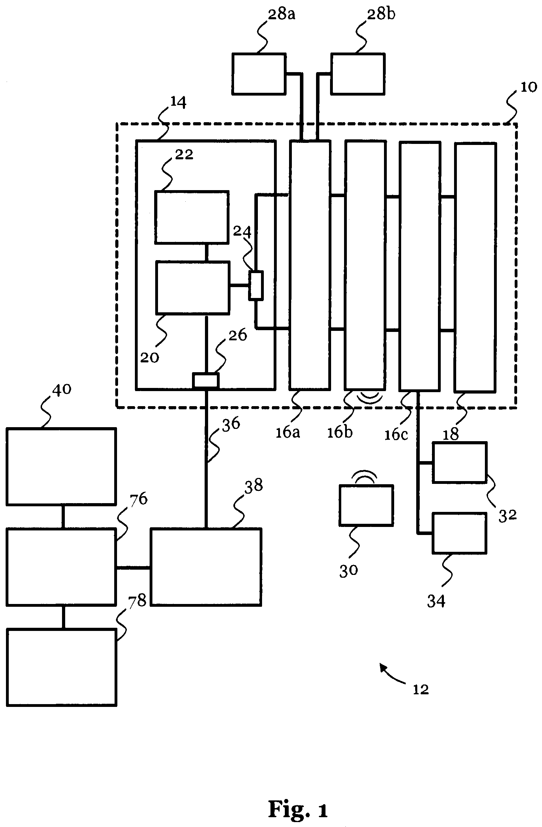

Fig. 1 zeigt ein System 10, welches mit einem Netzwerk 12 verbunden ist. Das System 10 umfasst ein Basismodul 14, drei Erweiterungsmodule 16a-16c und ein Abschlussmodul 18. Das System 10 kann zudem einen Adapter zum Anbringen des Systems 10 an einer Tragschiene, bspw. einer Hutschiene (z. B. TS 35) aufweisen. Das Basismodul 14, die Erweiterungsmodule 16a-16c und das Abschlussmodul 18 sind aneinander gereiht und miteinander elektrisch und mechanisch lösbar gekoppelt. Das Basismodul 14 umfasst eine zentrale Verarbeitungseinheit 20, einen (nichtflüchtigen) Speicher 22, eine Lokalbus-Kommunikationseinheit 24 und eine Feldbusschnittstelle 26. Der Speicher 22, die Lokalbus-Kommunikationseinheit 24 und die Feldbusschnittstelle 26 sind über Datenleitungen mit der zentralen Verarbeitungseinheit 20 verbunden. Die zentrale Verarbeitungseinheit 20 kann einen oder mehrere Prozessorkerne aufweisen, sowie ein oder mehrere Register und einen Speichermanager, der einen Arbeitsspeicher der zentralen Verarbeitungseinheit 20 verwaltet.

Die Lokalbus-Kommunikationseinheit 24 umfasst einen Lokalbus-Eingang und einen Lokalbus-Ausgang, die jeweils über eine Datenleitung mit den angereihten Erweiterungsmodulen 16a-16c verbunden sind. Das Basismodul 14 und die Erweiterungsmodule 16a-16c formen eine logische Ringtopologie. Die Lokalbus-Kommunikationseinheit 24 speist an die Erweiterungsmodule 16a-16c adressierte Daten über die mit dem Lokalbus-Eingang der Lokalbus-Kommunikationseinheit 24 verbundene Datenleitung, die Teil eines ersten Datenleitungsstrangs ist, in die Ringtopologie ein. Dazu erzeugt das Basismodul 14 bspw. einen Datenrahmen, d. h. eine Datenstruktur vorgegebener Größe, die an eines oder mehrere der Erweiterungsmodule 16a-16c adressierte Daten umfasst und überträgt diesen Datenrahmen an das erste Erweiterungsmodul 16a, welches die an das erste Erweiterungsmodul 16a adressierten Daten aus dem Datenrahmen ausliest und an andere Erweiterungsmodule 16b, 16c bzw. an das Basismodul 14 adressierte Daten in den Datenrahmen schreibt.

Die Adressen der Erweiterungsmodule 16a-16c können auf der jeweiligen Anreihungsposition basieren, bspw. indem den Erweiterungsmodulen 16a-16c Adressen zugeteilt werden bzw. die Erweiterungsmodule 16a-16c sich Adressen zuteilen, die von ihrer Anreihungsposition abgeleitet sind. Bspw. kann gemäß der jeweiligen Anreihungsposition dem ersten Erweiterungsmodul 16a die Adresse "1", dem zweiten Erweiterungsmodul 16b die Adresse "2" und dem dritten Erweiterungsmodul 16c die Adresse "3" zugeteilt sein. Jedes Erweiterungsmodul 16a-16c kann dabei vom vorhergehenden Erweiterungsmodul 16a-16c die jeweilige Adresse empfangen und daraus seine Adresse ableiten. Das Basismodul 14 kann ferner die so adressierten Erweiterungsmodule 16a-16c der Reihe nach abfragen, um zu bestimmen, wie viele Erweiterungsmodule 16a-16c am Basismodul 14 angereiht sind, um dadurch den bei der Ansprache der Erweiterungsmodule (16a-16c) zu verwendenden Adressraum zu bestimmen. Alternativ kann das Basismodul 14 bspw. durch eine in einem Datenrahmen an die Erweiterungsmodule 16a-16c übertragene Abfragenachricht die Erweiterungsmodule 16a-16c auffordern, ihre Adresse in den Datenrahmen zu schreiben. Ferner kann bei einem festen Adressierungsmuster das jeweils folgende Erweiterungsmodul 16a-16c eine in den Datenrahmen geschriebene Adresse des vorhergehenden Erweiterungsmoduls 16a-16c mit einer eigenen Adresse überschreiben, so dass dem Basismodul 14 nur eine einzige Adresse übermittelt wird, aus der das Basismodul 14 die Adressen der Erweiterungsmodule 16a-16c auf Basis des Adressierungsmusters herleiten kann. Des Weiteren kann das Basismodul 14 die Anzahl der Erweiterungsmodule 16a-16c aus der Umlaufzeit des Datenrahmens bestimmen, wenn die Übertragung des Datenrahmens zwischen den Erweiterungsmodulen 16a-16c einem festen Takt folgt.

Die Lokalbus-Kommunikationseinheit 24 liest die, von den Erweiterungsmodulen 16a-16c an das Basismodul 14 adressierten Daten über die mit dem Lokalbus-Ausgang der Lokalbus-Kommunikationseinheit 24 verbundene Datenleitung, die Teil eines zweiten Datenleitungsstrangs ist, aus der logischen Ringtopologie aus. Bspw. empfängt das Basismodul 14 den Datenrahmen nach Durchlauf durch die Ringtopologie, bei dem der Datenrahmen über den ersten Datenleitungsstrang von dem ersten Erweiterungsmodul 16a über das benachbarte zweite Erweiterungsmodul 16b zu dem dritten Erweiterungsmodul 16c und in umgekehrter Richtung über den zweiten Datenleitungsstrang von dem dritten Erweiterungsmodul 16c über das benachbarte zweite Erweiterungsmodul 16b zu dem ersten Erweiterungsmodul 16a seriell verschoben wird, von dem ersten Erweiterungsmodul 16a.

Wie in Fig. 1 gezeigt, sind der erste Datenleitungsstrang und der zweite Datenleitungsstrang durch das Abschlussmodul 18 verbunden, wodurch das System 10 durch das Einfügen weiterer Erweiterungsmodule, bspw. zwischen das dritte Erweiterungsmodul 16c und das Abschlussmodul 18 nach Bedarf erweitert werden kann. Ferner kann das System 10 durch das Entfernen oder Austauschen von Erweiterungsmodulen 16a-16c modifiziert werden. In diesem Zusammenhang wird darauf hingewiesen, dass die Anzahl der Erweiterungsmodule 16a-16c nicht auf drei beschränkt ist, sondern dass in anderen Ausführungsbeispielen bspw. 2, mehr als 5, mehr als 10, mehr als 25, mehr als 50 oder mehr als 100 Erweiterungsmodule an das Basismodul 14 angereiht sein können.

Die in Fig.1 gezeigten angereihten Erweiterungsmodule 16a-16c weisen jeweils eine oder mehrere Peripherieschnittstellen auf. So weist das erste Erweiterungsmodul 16a eine erste Peripherieschnittstelle und eine zweite Peripherieschnittstelle auf. Die erste Peripherieschnittstelle ist über einen ersten Stromleiter mit einem ersten Schalter 28a verbunden. Die zweite Peripherieschnittstelle ist über einen zweiten Stromleiter mit einem zweiten Schalter 28b verbunden. Ferner weist das zweite Erweiterungsmodul 16b eine Funkschnittstelle auf, die im Wechsel zum Senden und Empfangen von Daten betrieben werden kann und über Funk mit einer Aktor-Einheit 30 verbunden ist. Des Weiteren weist das dritte Erweiterungsmodul 16c eine dritte Peripherieschnittstelle auf, die über ein Datenkabel mit einem ersten Sensor 32 und einem zweiten Sensor 34 verbunden ist. Die Sensoren 32, 34 und das dritte Erweiterungsmodul 16c sind dabei Teilnehmer eines Bussystems. Ferner kann die dritte Peripherieschnittstelle, wie die Funkschnittstelle, uni- oder bidirektional betrieben werden.

Die Feldbusschnittstelle 26 ist über ein Datenkabel 36 mit einem Steuergerät 38 verbunden, welches dazu vorgesehen ist, Zustands-Informationen hinsichtlich an einer oder mehreren der Peripherieschnittstellen empfangener analoger oder digitaler Signale zu empfangen und an einer oder mehreren der Peripherieschnittstellen anliegende Strom- und/oder Spannungspegel auf Basis von empfangenen Steuer-Informationen zu steuern. Beispielsweise kann das Steuergerät 38 dazu vorgesehen sein, bei Betätigung des ersten Schalters 28a in Abhängigkeit eines Messwertes des ersten Sensors 32 ein Schalten des zweiten Schalters 28b zu bewirken.

Um die Implementierung dieser Funktionalität zu vereinfachen, ist das System 10 dazu eingerichtet, einer zur Programmierung (des Systems 10 und) des Steuergeräts 38 vorgesehenen Konfigurationseinrichtung 40 Informationen über die verfügbaren elektrischen Peripherieschnittstellen der Erweiterungsmodule 16a-16c bereitzustellen, wodurch ein das Steuergerät 38 mittels der Konfigurationseinrichtung 40 programmierender Inbetriebnehmer beim Adressieren der elektrischen Peripherieschnittstellen des Systems 10 bzw. der Erweiterungsmodule 16a-16c unterstützt wird. Insbesondere ist das System 10 dazu eingerichtet, eine Initialisierungsroutine durchzuführen und im Rahmen der Initialisierungsroutine die Erweiterungsmodule 16a-16c hinsichtlich Beschreibungsdaten über die elektrischen Peripherieschnittstellen der Erweiterungsmodule 16a-16c abzufragen.

Beispielsweise kann jedes der Erweiterungsmodule 16a-16c dazu eingerichtet sein, in Antwort auf eine Abfrage des Basismoduls 14 hinsichtlich Informationen, die das jeweilige Erweiterungsmodul i6a-i6c beschreiben, eine individuelle, das jeweilige Erweiterungsmodul 16a-16c beschreibende Informationen umfassende Datenstruktur, an das Basismodul 14 zu übertragen. Die individuelle Datenstruktur kann bspw. die Anzahl, Adressierung und Beschaffenheit der Peripherieschnittstellen des entsprechenden Erweiterungsmoduls 16a-16c beschreiben und eine eindeutige Identifikation desselbigen umfassen, mit Hilfe derer sich bspw. weitere Informationen über das Erweiterungsmodul 16a-16c (bspw. von einem im Netzwerk 12 angeordneten Server) beschaffen lassen. Die individuellen Datenstrukturen können im Speicher 22 des Basismoduls 14 zu einer Datenstruktur zusammengeführt und gespeichert werden. Die Datenstruktur kann feldbusspezifisch aufbereitet sein, bspw. indem die feldbusspezifische Datenstruktur ein Format aufweist, das (durch das Feldbusprotokoll) für über den Feldbus zu übertragende Datenpakete vorgegeben ist. Bspw. kann die Datenstruktur mehrere Datenpakete umfassen, wobei jedes Datenpaket mit einem feldbusspezifischen Kopf ("Header") beginnt, auf den Daten folgen, die auf den das jeweilige Erweiterungsmodul 16a-16c beschreibenden Informationen basieren. Bspw. können die Daten XML-Listen umfassen, die Beschreibungsdaten über die Peripherieschnittstellen umfassen.

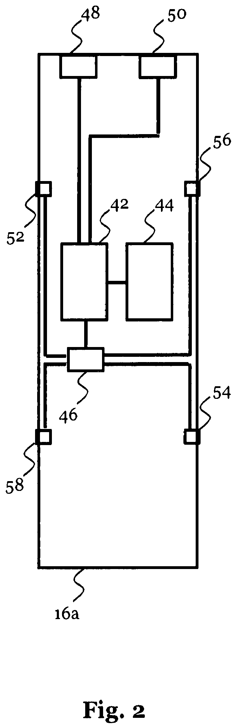

Fig. 2 zeigt dazu beispielhaft eine mögliche Ausgestaltung des ersten Erweiterungsmoduls 16a des Systems 10. Das erste Erweiterungsmodul 16a umfasst eine zentrale Verarbeitungseinheit 42, einen Speicher 44, eine Lokalbus-Kommunikationseinheit 46, eine erste Peripherieschnittstelle 48 und eine zweite Peripherieschnittstelle 50. Die Lokalbus-Kommunikationseinheit 46 des ersten Erweiterungsmoduls 16a ist mit zwei Lokalbus-Eingängen 52, 54 und zwei Lokalbus-Ausgängen 56, 58 des ersten Erweiterungsmoduls 16a verbunden. Der erste Lokalbus-Eingang 52 und der zweite Lokalbus-Ausgang 58 sind beispielsweise als Messerkontakte ausgeführt, die beim Anreihen des ersten Erweiterungsmoduls 16a an das Basismodul 14 auf entsprechende Federkontakte des Lokalbus-Ein- bzw. Ausgangs des Basismoduls 14 gedrückt werden und so eine lösbare elektrische Verbindung zwischen dem Basismodul 14 und dem ersten Erweiterungsmodul 16a herstellen.

Ebenso können der erste Lokalbus-Ausgang 56 und der zweite Lokalbus-Eingang 54 des ersten Erweiterungsmoduls 16a als Federkontakte ausgebildet sein, die beim Anreihen des zweiten Erweiterungsmoduls 16b an das erste Erweiterungsmodul 16a auf entsprechende Messerkontakte des zweiten Erweiterungsmoduls 16b gedrückt werden und so eine lösbare elektrische Verbindung zwischen dem zweiten Erweiterungsmodul 16b und dem ersten Erweiterungsmodul 16a herstellen. Alternativ können die Erweiterungsmodule 16a-16c über flexible Kabel verbunden sein, deren Enden bspw. mit Steckern versehen sind, die in entsprechende Buchsen an den Erweiterungsmodulen 16a-16c gesteckt sind. Ferner können die Enden der Kabel mittels in den Erweiterungsmodulen 16a-16c vorgesehener Klemmkontakte mit jeweiligen Erweiterungsmodulen 16a-16c verbunden sein.

Empfängt die Lokalbus-Kommunikationseinheit 46 im Rahmen der Initialisierungsroutine über den ersten Lokalbus-Eingang 52 eine Abfrage des Basismoduls 14 hinsichtlich Informationen, die das erste Erweiterungsmodul 16a beschreiben, kann die Verarbeitungseinheit 42 in Antwort auf die Abfrage eine in dem Speicher 44 gespeicherte, das erste Erweiterungsmodul 16a beschreibende Informationen umfassende Datenstruktur (im Folgenden auch als "erste Datenstruktur" bezeichnet) auslesen und über die Lokalbus-Kommunikationseinheit 46 an die Lokalbus-Kommunikationseinheit 24 des Basismoduls 14 senden. Die erste Datenstruktur kann dabei Informationen darüber enthalten, dass das erste Erweiterungsmodul 16a eine erste Peripherieschnittstelle 48 und eine zweite Peripherieschnittstelle 50 umfasst. Ferner kann die erste Datenstruktur Informationen darüber enthalten, ob es sich bei der ersten Peripherieschnittstelle 48 und der zweiten Peripherieschnittstelle 50 des ersten Erweiterungsmoduls 16a um analoge oder digitale Peripherieschnittstellen handelt. Des Weiteren kann die erste Datenstruktur Informationen darüber enthalten, wie die erste Peripherieschnittstelle 48 und die zweite Peripherieschnittstelle 50 des ersten Erweiterungsmoduls 16a zu adressieren sind. Bspw. kann die erste Datenstruktur eine Adresse der ersten Peripherieschnittstelle 48 und eine Adresse der zweiten Peripherieschnittstelle 50 des ersten Erweiterungsmoduls 16a umfassen.

Alternativ oder zusätzlich kann die erste Datenstruktur eine eindeutige Kennung des ersten Erweiterungsmoduls 16a umfassen, wodurch der Konfigurationseinrichtung 40 Informationen über die elektrischen Peripherieschnittstellen 48, 50 des ersten Erweiterungsmoduls 16a implizit bereitgestellt werden. Des Weiteren kann die erste Datenstruktur Informationen darüber enthalten, ob die erste Peripherieschnittstelle 48 und die zweite Peripherieschnittstelle 50 des ersten Erweiterungsmoduls 16a mit weiteren Geräten verbunden sind. Dazu kann das erste Erweiterungsmodul 16a dazu eingerichtet sein, zu überprüfen, ob die erste Peripherieschnittstelle 48 oder die zweite Peripherieschnittstelle 50 mit einem Gerät verbunden ist und entsprechende Informationen in der ersten Datenstruktur ablegen. Bspw. kann die erste Datenstruktur Informationen darüber enthalten, dass die erste Peripherieschnittstelle 48 des ersten Erweiterungsmoduls 16a mit dem ersten Schalter 28a und die zweite Peripherieschnittstelle 50 des ersten Erweiterungsmoduls 16a mit dem zweiten Schalter 28b verbunden ist.

Ferner ist die Lokalbus-Kommunikationseinheit 46 dazu eingerichtet, im Rahmen der Initialisierungsroutine über den ersten Lokalbus-Eingang 52 empfangene Abfragen des Basismoduls 14 hinsichtlich Informationen, die das zweite und das dritte Erweiterungsmodul 16b, 16c beschreiben, über den ersten Lokalbus-Ausgang 56 an das zweite und das dritte Erweiterungsmodul 16b, 16c weiterzuleiten. Des Weiteren ist die Lokalbus-Kommunikationseinheit 46 dazu eingerichtet, Informationen über das erste Erweiterungsmodul 16a über den zweiten Lokalbus-Ausgang 58 an das Basismodul 14 zu senden und über den zweiten Lokalbus-Eingang 54 von dem zweiten und dritten Erweiterungsmodul 16b, 16c empfangene Informationen über den zweiten Lokalbus-Ausgang 58 an das Basismodul 14 weiterzuleiten.

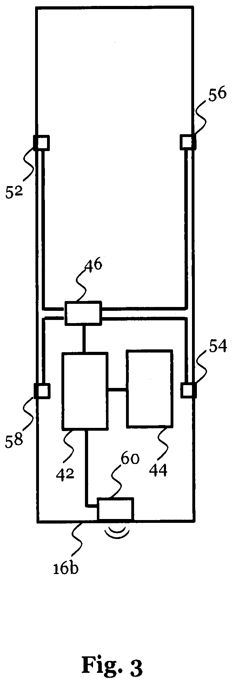

Fig. 3 zeigt beispielhaft eine mögliche Ausgestaltung des zweiten Erweiterungsmoduls 16b des Systems 10. Das zweite Erweiterungsmodul 16b umfasst, wie das erste Erweiterungsmodul 16a, eine zentrale Verarbeitungseinheit 42, einen Speicher 44 und eine Lokalbus-Kommunikationseinheit 46. Jedoch umfasst das zweite Erweiterungsmodul 16b anstatt der ersten Peripherieschnittstelle 48 und der zweiten Peripherieschnittstelle 50 des ersten Erweiterungsmoduls 16a die Funkschnittstelle 60, die im Wechsel zum Senden und Empfangen von Daten betrieben werden kann. Wie bei dem ersten Erweiterungsmodul 16a, ist die Lokalbus-Kommunikationseinheit 46 des zweiten Erweiterungsmoduls 16b mit zwei Lokalbus-Eingängen 52, 54 und zwei Lokalbus-Ausgängen 56, 58 verbunden. Der erste Lokalbus-Eingang 52 und der zweite Lokalbus-Ausgang 58 sind beispielsweise als Messerkontakte ausgeführt, die beim Anreihen des zweiten Erweiterungsmoduls 16b an das erste Erweiterungsmodul 16a auf entsprechende Federkontakte des ersten Erweiterungsmoduls 16a gedrückt werden und so eine lösbare elektrische Verbindung zwischen dem zweiten Erweiterungsmodul 16b und dem ersten Erweiterungsmodul 16a herstellen. Ferner können auch die im Zusammenhang mit dem ersten Erweiterungsmodul 16a beschriebenen (alternativen) Kontaktarten realisiert sein.

Empfängt die Lokalbus-Kommunikationseinheit 46 im Rahmen der Initialisierungsroutine über den ersten Lokalbus-Eingang 52 eine Abfrage des Basismoduls 14 hinsichtlich Informationen, die das zweite Erweiterungsmodul 16b beschreiben, kann die Verarbeitungseinheit 42 in Antwort auf die Abfrage eine in dem Speicher 44 gespeicherte, das zweite Erweiterungsmodul 16b beschreibende Informationen umfassende Datenstruktur (im Folgenden auch als "zweite Datenstruktur" bezeichnet) auslesen und über die Lokalbus-Kommunikationseinheit 46 an die Lokalbus-Kommunikationseinheit 24 des Basismoduls 14 senden. Die zweite Datenstruktur kann dabei Informationen enthalten, die denen entsprechen, die im Zusammenhang mit der ersten Datenstruktur genannt wurden. Zusätzlich kann die zweite Datenstruktur Informationen über den oder die von der Funkschnittstelle 60 unterstützen Funkstandards wie bspw. EnOcean, ZigBee, Z-Wave, Bluetooth, WLAN, etc., sowie Informationen über die über Funk erreichbaren Geräte enthalten. Bspw. kann die zweite Datenstruktur eine Adresse (z. B. MAC-Adresse) und einen Typ der Aktor-Einheit 30 (z. B. Ventilator, Heizungsventil, Rollladenmotor, etc.) umfassen.

Ferner ist die Lokalbus-Kommunikationseinheit 46 dazu eingerichtet, eine im Rahmen der Initialisierungsroutine über den ersten Lokalbus-Eingang 52 empfangene Abfrage des Basismoduls 14 hinsichtlich Informationen, die das dritte Erweiterungsmodul 16c beschreiben, über den ersten Lokalbus-Ausgang 56 an das dritte Erweiterungsmodul 16c weiterzuleiten. Des Weiteren ist die Lokalbus-Kommunikationseinheit 46 dazu eingerichtet, Informationen über das zweite Erweiterungsmodul 16b über den zweiten Lokalbus-Ausgang 58 via das erste Erweiterungsmodul 16a an das Basismodul 14 zu senden und über den zweiten Lokalbus-Eingang 54 von dem dritten Erweiterungsmodul 16c empfangene Informationen über den zweiten Lokalbus-Ausgang 58 58 via das erste Erweiterungsmodul 16a an das Basismodul 14 weiterzuleiten.

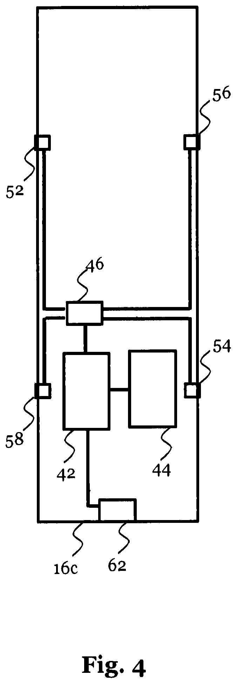

Fig. 4 zeigt beispielhaft eine mögliche Ausgestaltung des dritten Erweiterungsmoduls 16c des Systems 10. Das dritte Erweiterungsmodul 16c umfasst, wie das erste und das zweite Erweiterungsmodul 16a, 16b, eine zentrale Verarbeitungseinheit 42, einen Speicher 44 und eine Lokalbus-Kommunikationseinheit 46. Jedoch umfasst das dritte Erweiterungsmodul 16c anstatt der ersten Peripherieschnittstelle 48 und der zweiten Peripherieschnittstelle 50 bzw. der Funkschnittstelle 60 die dritte Peripherieschnittstelle 62. Wie bei dem ersten Erweiterungsmodul 16a und dem zweiten Erweiterungsmodul 16b, ist die Lokalbus-Kommunikationseinheit 46 des dritten Erweiterungsmoduls 16c mit zwei Lokalbus-Eingängen 52, 54 und zwei Lokalbus-Ausgängen 56, 58 verbunden. Der erste Lokalbus-Eingang 52 und der zweite Lokalbus-Ausgang 58 sind beispielsweise als Messerkontakte ausgeführt, die beim Anreihen des dritten Erweiterungsmoduls 16c an das zweite Erweiterungsmodul 16b auf entsprechende Federkontakte des zweiten Erweiterungsmoduls 16b gedrückt werden und so eine lösbare elektrische Verbindung zwischen dem dritten Erweiterungsmodul 16c und dem zweiten Erweiterungsmodul 16b herstellen. Ferner können auch die im Zusammenhang mit dem ersten und zweiten Erweiterungsmodul 16a, 16b beschriebenen alternativen Kontaktarten realisiert sein.

Empfängt die Lokalbus-Kommunikationseinheit 46 im Rahmen der Initialisierungsroutine über den ersten Lokalbus-Eingang 52 eine Abfrage des Basismoduls 14 hinsichtlich Informationen, die das dritte Erweiterungsmodul 16c beschreiben, kann die Verarbeitungseinheit 42 in Antwort auf die Abfrage eine in dem Speicher 44 gespeicherte, das dritte Erweiterungsmodul 16c beschreibende Informationen umfassende Datenstruktur (im Folgenden auch als "dritte Datenstruktur" bezeichnet) auslesen und über die Lokalbus-Kommunikationseinheit 46 an die Lokalbus-Kommunikationseinheit 24 des Basismoduls 14 senden. Die dritte Datenstruktur kann dabei Informationen enthalten, die denen entsprechen, die im Zusammenhang mit der ersten Datenstruktur genannt wurden. Zusätzlich kann die dritte Datenstruktur Informationen über den oder die von der dritten Peripherieschnittstelle 62 unterstützen Übertragungsstandards wie bspw. KNX, BACnet, MODBUS, LonWorks, Dali, MP-Bus, IO-Link, etc., sowie Informationen über die mittels der dritten Peripherieschnittstelle 62 (zum Zeitpunkt der Abfrage) erreichbaren Geräte enthalten. Bspw. kann die dritte Datenstruktur eine Adresse (z. B. eine MAC-Adresse) und einen Typ eines oder beider Sensoren 32, 34 (z. B. Lichtsensor, Temperatursensor, Regensensor, Windsensor, etc.) umfassen.

Ferner ist die Lokalbus-Kommunikationseinheit 46 dazu eingerichtet, eine im Rahmen der Initialisierungsroutine über den ersten Lokalbus-Eingang 52 empfangene Abfrage des Basismoduls 14 hinsichtlich Informationen, die das dritte Erweiterungsmodul 16c beschreiben, zu empfangen und in Antwort entsprechende Informationen über den zweiten Lokalbus-Ausgang 58 (über das zweite und das erste Erweiterungsmodul 16b, 16a) an das Basismodul 14 zu senden.

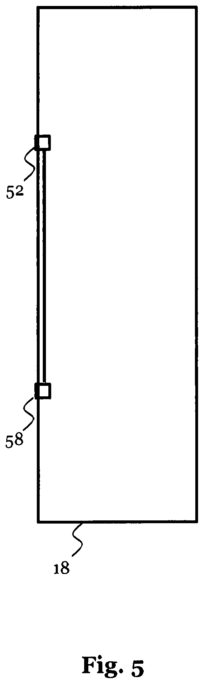

Fig. 5 zeigt beispielhaft eine mögliche Ausgestaltung des Abschlussmoduls 18 des Systems 10. Das Abschlussmodul 18 umfasst einen Lokalbus-Eingang 52 und einen Lokalbus-Ausgang 58. Der Lokalbus-Eingang 52 und der Lokalbus-Ausgang 58 sind miteinander elektrisch verbunden, wodurch der erste Datenleitungsstrang mit dem zweiten Datenleitungsstrang verbunden und die Ringtopologie geschlossen wird. Der Lokalbus-Eingang 52 und der Lokalbus-Ausgang 58 sind beispielsweise als Messerkontakte ausgeführt, die beim Anreihen des Abschlussmoduls 18 an das dritte Erweiterungsmodul 18 auf entsprechende Federkontakte des dritten Erweiterungsmoduls 16c gedrückt werden und so eine lösbare elektrische Verbindung zwischen dem Abschlussmodul 18 und dem dritten Erweiterungsmodul 16c herstellen. Ferner können auch die im Zusammenhang mit dem ersten, zweiten und dritten Erweiterungsmodul 16a, 16b, 16c beschriebenen alternativen Kontaktarten realisiert sein.

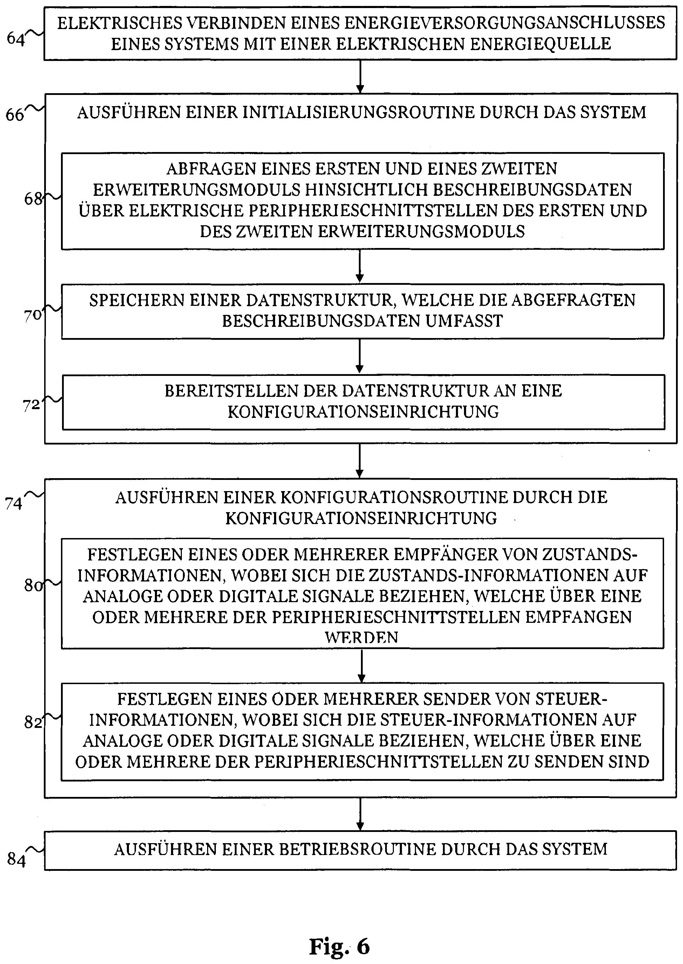

Fig. 6 zeigt ein Flussdiagramm des Verfahrens zum in Betrieb nehmen des Systems 10. Das Verfahren beginnt bei Schritt 64 mit dem Versorgen des Systems 10 mit elektrischer Energie. Das Versorgen des Systems 10 mit elektrischer Energie kann ein erstmaliges Versorgen des Systems 10 mit elektrischer Energie nach dem Versetzen des Systems 10 in einen Auslieferungszustand (bspw. durch einen Hersteller des Systems 10 oder durch einen Reset), oder ein Versorgen des Systems 10 mit elektrischer Energie und Versetzen des Systems 10 in einen Initialisierungszustand (durch einen Inbetriebnehmer) sein, wobei das System 10 dazu eingerichtet ist, in dem Initialisierungszustand eine Initialisierungsroutine durchzuführen. Das Versetzen des Systems 10 in den Initialisierungszustand kann bspw. durch Betätigen eines Schalters an dem System 10 bewirkt werden. Ferner kann das Versetzen des Systems 10 in den Initialisierungszustand dadurch bewirkt werden, dass das Basismodul 14 eine Veränderung der Anzahl der angereihten Erweiterungsmodule 16a-16c im Vergleich zu einem (früheren) protokollierten Zustand erfasst. Ferner kann das Versetzen des Systems 10 in den Initialisierungszustand dadurch bewirkt werden, dass das Basismodul 14 eine Veränderung des Typs oder der Reihung der angereihten Erweiterungsmodule 16a-16c im Vergleich zu einem (früheren) protokollierten Zustand erfasst.

Das Ausführen (Schritt 66) der Initialisierungsroutine umfasst das Abfragen (Schritt 68) von Informationen hinsichtlich der an dem Basismodul 14 angereihten Erweiterungsmodule 16a-16c. Bspw. umfasst besagtes Abfragen von Informationen das Abfragen von Informationen hinsichtlich Adressen, Identifikationen, eines Typs und verfügbarer Peripherieschnittstellen der Erweiterungsmodule 16a-16c. Die abgefragten Informationen werden in einer Datenstruktur gespeichert (Schritt 70) und einer Konfigurationseinrichtung 40 bereitgestellt (Schritt 72) bzw. an die Konfigurationseinrichtung 40 übertragen.

Dazu kann bspw. das System 10 das Netzwerk 12 nach der Konfigurationseinrichtung 40 durchsuchen. So kann das System 10 bspw. eine entsprechende Anfrage an das Steuergerät 38 senden, die von dem Steuergerät 38 an weitere Netzwerkteilnehmer 76, 40, 78 (siehe Fig. 1) weitergeleitet wird. Bspw. kann die Anfrage von dem Steuergerät 38 an einen Router 76 weitergeleitet werden, der mit einem Server 78 zum Bereitstellen von Softwareupdates für die Erweiterungsmodule 16a-16c und zum Bereitstellen von Informationen über die Erweiterungsmodule 16a-16c eingerichtet ist. Der Router 76 kann in Antwort auf die Anfrage eine Netzwerkadresse der Konfigurationseinrichtung 40 an das Steuergerät 38 übertragen, welches die Netzwerkadresse der Konfigurationseinrichtung 40 an das Basismodul 14 weiterleitet. Das System 10 kann dann die Datenstruktur über das Netzwerk 12 an die Konfigurationseinrichtung 40 übertragen, welche ergänzende Informationen vom Server 78 abfragen kann. Bspw. kann die Datenstruktur eine (eindeutige) Kennung des dritten Erweiterungsmoduls 16c umfassen, welche die Konfigurationseinrichtung 40 an den Server 78 sendet, der in Antwort darauf beschreibende Informationen hinsichtlich des dritten Erweiterungsmoduls 16c an die Konfigurationseinrichtung 40 übermittelt. Wenn die Konfigurationseinrichtung 40 feststellt, dass eine oder mehrere im Speicher 44 des dritten Erweiterungsmoduls 16c gespeicherte Dateien aktualisiert werden können/müssen, kann sie ferner eine entsprechende Aktualisierung vom Server 78 abrufen und an das dritte Erweiterungsmodul 16c übertragen.

Die Konfigurationseinrichtung 40 kann dann vom Konfigurierenden dazu genutzt werden, das System 10 zu konfigurieren oder eine automatische Konfiguration vornehmen. Dabei wird insbesondere festgelegt (Schritt 80), an wen die an den Peripherieschnittstellen 48, 60, 62 empfangenen Signale oder Zustands-Informationen (über die an den Peripherieschnittstellen 48, 60, 62 empfangenen Signale) weitergeleitet bzw. gesendet werden sollen. Ferner kann festgelegt werden (Schritt 82), von welchem Gerät die Peripherieschnittstellen 50, 60 gesteuert werden sollen. Bspw. kann festgelegt werden, dass die Signale des ersten Sensors 32 an die Aktor-Einheit 30 und Zustands-Informationen über die Signale des zweiten Sensors 34 und über einen Schaltzustand des ersten Schalters 28a an das Steuergerät 38 gesendet werden sollen. Ferner kann festlegt werden, dass der Schaltzustand des zweiten Schalters 28b durch das Steuergerät 38 gesteuert werden soll, bspw. in Abhängigkeit von den Zustands-Informationen über die Signale des zweiten Sensors 34.

Nach dem Konfigurieren kann das System 10 in einen Betriebszustand versetzt werden, in dem es eine Betriebsroutine ausführt (Schritt 84). Das Versetzen in den Betriebszustand kann bspw. durch ein entsprechendes Signal der Konfigurationseinrichtung 40 oder durch ein Betätigen eines Schalters an dem System 10 bewirkt werden. Im Betriebszustand sendet das System 10 dann bspw. die Zustands-Informationen über die Signale des zweiten Sensors 34 und einen Schaltzustand des ersten Schalters 28a an das Steuergerät 38 und empfängt Steuer-Informationen von dem Steuergerät 38 und steuert einen Schaltzustand des zweiten Schalters 28b auf Basis der empfangenen Steuer-Informationen. Durch das Bereitstellen der Datenstruktur kann somit die Konfiguration des Systems 10 vereinfacht werden, wodurch das Versetzen des Systems 10 in den Betriebszustand beschleunigt werden kann.

### BEZUGSZEICHENLISTE

- 10: System
- 12: Netzwerk
- 14: Basismodul
- 16: Erweiterungsmodul
- 18: Abschlussmodul
- 20: zentrale Verarbeitungseinheit
- 22: Speicher
- 24: Lokalbus-Kommunikationseinheit
- 26: Feldbusschnittstelle
- 28: Schalter
- 30: Aktor-Einheit
- 32: Sensor
- 34: Sensor
- 36: Datenkabel
- 38: Steuergerät
- 40: Konfigurationseinrichtung
- 42: Verarbeitungseinheit
- 44: Speicher
- 46: Lokalbus-Kommunikationseinheit
- 48: Peripherieschnittstelle
- 50: Peripherieschnittstelle
- 52: Lokalbus-Eingang
- 54: Lokalbus-Eingang
- 56: Lokalbus-Ausgang
- 58: Lokalbus-Ausgang
- 60: Funkschnittstelle
- 62: Peripherieschnittstelle
- 64-74: Prozessschritte
- 76: Router
- 78: Server
- 80-84: Prozessschritte

## Patentansprüche

1. Verfahren zum Initialisieren eines Systems (10), welches ein Basismodul (14) und ein erstes und ein zweites Erweiterungsmodul (16a-16c) umfasst, wobei das erste und das zweite Erweiterungsmodul (16a, 16b) mit dem Basismodul (14) elektrisch lösbar gekoppelt sind und jeweils eine oder mehrere elektrische Peripherieschnittstellen (48, 50, 60) aufweisen, wobei das Verfahren umfasst:
Ausführen einer Initialisierungsroutine durch das System (10), wobei die Initialisierungsroutine umfasst:
Abfragen des ersten und des zweiten Erweiterungsmoduls (16a-16c) hinsichtlich Beschreibungsdaten;
Speichern einer Datenstruktur, welche die abgefragten Beschreibungsdaten umfasst; und
Bereitstellen der Datenstruktur an eine Konfigurationseinrichtung (40);
**dadurch gekennzeichnet, dass**
die Beschreibungsdaten Kenndaten der elektrischen Peripherieschnittstellen (48, 50, 60) und eine Identifikation des ersten und des zweiten Erweiterungsmoduls (16a-16c) umfassen; und
das Verfahren ferner umfasst:
Überprüfen, ob eines der abgefragten Erweiterungsmodule (16a-16c) über eine Peripherieschnittstelle (62) verfügt, welche dazu vorgesehen und eingerichtet ist, Datenpakete über eine mit der Peripherieschnittstelle (62) verbundene Datenleitung zu senden und zu empfangen;
wenn eines der abgefragten Erweiterungsmodule (16a-16c) über eine Peripherieschnittstelle (62) verfügt, welche dazu vorgesehen und eingerichtet ist, Datenpakete über eine mit der Peripherieschnittstelle (62) verbundene Datenleiturig zu senden und zu empfangen, Abfragen der Peripherieschnittstelle (62) hinsichtlich Geräten (32, 34), mit denen mittels des Sendens und/oder Empfangens von Datenpaketen über die Peripherieschnittstelle (62) Daten ausgetauscht werden können; und
Speichern von Geräte-Informationen über die Geräte (32, 34), mit denen mittels des Sendens und/oder Empfangens von Datenpaketen Daten über die Peripherieschnittstelle (62) ausgetauscht werden können, in der Datenstruktur.

2. Verfahren zum Initialisieren eines Systems (10) nach Anspruch 1, ferner umfassend:
Ausführen einer Konfigurationsroutine durch die Konfigurationseinrichtung (40), wobei die Konfigurationsroutine umfasst:
Festlegen eines oder mehrerer Empfänger (28b, 30, 38) von Zustands-Informationen, wobei sich die Zustands-Informationen auf analoge oder digitale Signale beziehen, welche über eine oder mehrere der Peripherieschnittstellen (48, 50, 60) empfangen werden; und
Festlegen eines oder mehrerer Sender (28a, 32, 34, 38) von Steuer-Informationen, wobei sich die Steuer-Informationen auf analoge oder digitale Signale beziehen, welche über eine oder mehrere der Peripherieschnittstellen (48, 50, 60) zu senden sind.

3. Verfahren zum Initialisieren eines Systems (10) nach Anspruch 2, ferner umfassend:
Ausführen einer Betriebsroutine durch das System (10), wobei die Betriebsroutine umfasst:
Senden der Zustands-Informationen an den einen oder die mehreren festgelegten Empfänger (28b, 30, 38); und
Empfangen der Steuer-Informationen von dem einen oder den mehreren festgelegten Sendern (28a, 32, 34, 38) und Steuern von Strom- und/oder Spannungspegeln, welche an einer oder mehreren der Peripherieschnittstellen (48, 50, 60) anliegen, auf Basis der Steuer-Informationen.

4. Verfahren zum Initialisieren eines Systems (10) nach einem der Ansprüche 1 bis 3, ferner umfassend:
Abfragen eines Netzwerks (12) hinsichtlich Netzwerk-Geräten (38, 40, 76, 78), mit denen das System (10), mittels eines Sendens und Empfangens von Datenpaketen, Daten austauschen kann; und
Identifizieren eines der Netzwerk-Geräte (38, 40, 76, 78), mittels des Sendens und/oder Empfangens von Datenpaketen, als die Konfigurationseinrichtung (40);
wobei das Bereitstellen der Datenstruktur an die Konfigurationseinrichtung (40) ein Übertragen der Datenstruktur an die Konfigurationseinrichtung (40), mittels des Sendens von Datenpaketen an die Konfigurationseinrichtung (40), umfasst.

5. Verfahren zum Initialisieren eines Systems (10) nach einem der Ansprüche 1 bis 4, wobei die Geräte-Informationen eindeutige Identifikationen und/oder Adressen und/oder Informationen über digitale und/oder analoge Ein- und Ausgänge der Geräte (32, 34) umfassen.

6. Verfahren zum Initialisieren eines Systems (10) nach einem der Ansprüche 1 bis 5, wobei das Basismodul (14) und das erste und zweite Erweiterungsmodul (16a-16c) über ein Bussystem verbunden sind und die abgefragten Beschreibungsdaten Adressen des ersten und zweiten Erweiterungsmoduls (16a-16c) umfassen.

7. System (10), umfassend:
ein Basismodul (14), welches eine zentrale Verarbeitungseinheit (20), einen Speicher (22) und eine Feldbusschnittstelle (26) aufweist; und
ein erstes und ein zweites Erweiterungsmodul (16a, 16b), die mit dem Basismodul (14) elektrisch lösbar gekoppelt sind und jeweils eine oder mehrere elektrische Peripherieschnittstellen (48, 50, 60) aufweisen;
wobei das System (10) dazu eingerichtet ist, eine Initialisierungsroutine durchzuführen und im Rahmen der Initialisierungsroutine:
das erste und das zweite Erweiterungsmodul (i6a-i6c) hinsichtlich Beschreibungsdaten abzufragen;
eine Datenstruktur, welche die abgefragten Beschreibungsdaten umfasst, zu speichern; und
die Datenstruktur einer Konfigurationseinrichtung (40) bereitzustellen;
**dadurch gekennzeichnet, dass**
die Beschreibungsdaten Kenndaten der elektrischen Peripherieschnittstellen (48, 50, 60) und eine Identifikation des ersten und des zweiten Erweiterungsmoduls (16a-16c) umfassen; und
das System (10) ferner dazu eingerichtet ist:
zu überprüfen, ob eines der abgefragten Erweiterungsmodule (16a-16c) über eine Peripherieschnittstelle (62) verfügt, welche dazu vorgesehen und eingerichtet ist, Datenpakete über eine mit der Peripherieschnittstelle (62) verbundene Datenleitung zu senden und zu empfangen;
wenn eines der abgefragten Erweiterungsmodule (16a-16c) über eine Peripherieschnittstelle (62) verfügt, welche dazu vorgesehen und eingerichtet ist, Datenpakete über eine mit der Peripherieschnittstelle (62) verbundene Datenleitung zu senden und zu empfangen, die Peripherieschnittstelle (62) hinsichtlich Geräten (32, 34) abzufragen, mit denen mittels des Sendens und/oder Empfangens von Datenpaketen über die Peripherieschnittstelle (62) Daten ausgetauscht werden können; und
Geräte-Informationen über die Geräte (32, 34), mit denen mittels des Sendens und/oder Empfangens von Datenpaketen über die Peripherieschnittstelle (62) Daten ausgetauscht werden können, in der Datenstruktur zu speichern.

8. System (10) nach Anspruch 7, wobei das System (10) ferner dazu eingerichtet ist, im Betrieb:
Zustands-Informationen hinsichtlich an einer oder mehreren der Peripherieschnittstellen (48, 60) empfangener, analoger oder digitaler Signale an einen oder mehrere Empfänger (28b, 30, 38) zu senden; und
an einem oder mehreren der Peripherieschnittstellen (50, 60) anliegende Strom- und/oder Spannungspegel auf Basis von empfangenen Steuer-Informationen zu steuern;

9. System (10) nach Anspruch 8, wobei das System (10) ferner dazu eingerichtet ist, Informationen über den einen oder die mehreren Empfänger (28b, 30, 38) der Zustands-Informationen von der Konfigurationseinrichtung (40) zu empfangen.

10. System (10) nach einem der Ansprüche 7 bis 9, wobei das System (10) ferner dazu eingerichtet ist:
ein Netzwerk (12) hinsichtlich Netzwerk-Geräten (38, 40, 76, 78), mit denen das System (10) mittels des Sendens und/oder Empfangens von Datenpaketen Daten austauschen kann, abzufragen;
eines der Netzwerk-Geräte (38, 40, 76, 78) als die Konfigurationseinrichtung (40) zu identifizieren; und
die Datenstruktur an die Konfigurationseinrichtung (40), mittels an die Konfigurationseinrichtung (40) gesendeter Datenpakete, zu übertragen.

11. System (10) nach einem der Ansprüche 7 bis 10, wobei die Geräte-Informationen eindeutige Identifikationen und/oder Adressen der Geräte (32, 34) umfassen.

12. System (10) nach einem der Ansprüche 7 bis 11, wobei das Basismodul (14) und das erste und zweite Erweiterungsmodul (16a-16c) über ein Bussystem verbunden sind und die abgefragten Beschreibungsdaten Adressen der Erweiterungsmodule (16a-16c) oder Positionen der Erweiterungsmodule (16a-16c) in einer logischen Ringtopologie, welche von dem Basismodul (14) und den Erweiterungsmodulen (16a-16c) gebildet wird, umfassen.

## Claims

1. Method for initializing a system (10) comprising a basic module (14) and a first and a second expansion module (16a-16c), wherein the first and second expansion modules (16a, 16b) are electrically detachably coupled to the basic module (14) and each have one or more electrical peripheral interfaces (48, 50, 60), wherein the method comprises:
the system (10) performing an initialization routine, wherein the initialization routine comprises:
interrogating the first and second expansion modules (16a-16c) with regard to description data;
storing a data structure comprising the requested description data; and
providing the data structure to a configuration device (40) ;
**characterized in that**
the description data comprise characteristic data of the electrical peripheral interfaces (48, 50, 60) and
an identification of the first and second expansion modules (16a-16c); and
the method further comprises:
checking whether one of the interrogated expansion modules (16a-16c) has a peripheral interface (62) that is intended and designed to send and receive data packets via a data line connected to the peripheral interface (62):
if one of the interrogated expansion modules (16a-16c) has a peripheral interface (62) that is intended and designed to send and receive data packets via a data line connected to the peripheral interface (62),
interrogating the peripheral interface (62) with regard to devices (32, 34) with which data can be interchanged by means of the sending and/or receiving of data packets by way of the peripheral interface (62); and
storing device information about the devices (32, 34) with which data can be interchanged by way of the peripheral interface (62) by means of the sending and/or receiving of data packets in the data structure.

2. Method for initializing a system (10) according to Claim 1, further comprising:
the configuration device (40) performing a configuration routine, wherein the configuration routine comprises:
stipulating one or more receivers (28b, 30, 38) of state information, wherein the state information relates to analogue or digital signals that are received by way of one or more of the peripheral interfaces (48, 50, 60); and
stipulating one or more transmitters (28a, 32, 34, 38) of control information, wherein the control information relates to analogue or digital signals that need to be sent by way of one or more of the peripheral interfaces (48, 50, 60).

3. Method for initializing a system (10) according to Claim 2, further comprising:
the system (10) performing an operating routine, wherein the operating routine comprises:
sending the state information to the one or more stipulated receivers (28b, 30, 38); and
receiving the control information from the one or more stipulated transmitters (28a, 32, 34, 38) and
controlling current and/or voltage levels applied to one or more of the peripheral interfaces (48, 50, 60) on the basis of the control information.

4. Method for initializing a system (10) according to one of Claims 1 to 3, further comprising:
interrogating a network (12) with regard to network devices (38, 40, 76, 78) with which the system (10) can interchange data by means of a sending and receiving of data packets; and
identifying one of the network devices (38, 40, 76, 78), by means of the sending and/or receiving of data packets, as the configuration device (40);
wherein the providing of the data structure to the configuration device (40) comprises a transmitting of the data structure to the configuration device (40), by means of the sending of data packets to the configuration device (40).

5. Method for initializing a system (10) according to one of Claims 1 to 4, wherein the device information comprises unique identifications and/or addresses and/or information about digital and/or analogue inputs and outputs of the devices (32, 34).

6. Method for initializing a system (10) according to one of Claims 1 to 5, wherein the basic module (14) and the first and second expansion modules (16a-16c) are connected by way of a bus system and the requested description data comprise addresses of the first and second expansion modules (16a-16c).

7. System (10), comprising:
a basic module (14) that has a central processing unit (20), a memory (22) and a fieldbus interface (26); and
a first and a second expansion module (16a, 16b) that are electrically detachably coupled to the basic module (14) and each have one or more electrical peripheral interfaces (48, 50, 60);
wherein the system (10) is designed to perform an initialization routine and, as part of the initialization routine:
to interrogate the first and second expansion modules (16a-16c) with regard to description data;
to store a data structure comprising the requested description data; and
to provide the data structure to a configuration device (40),
**characterized in that**
the description data comprise characteristic data of the electrical peripheral interfaces (48, 50, 60) and
an identification of the first and second expansion modules (16a-16c); and
the system (10) is further designed
to check whether one of the interrogated expansion modules (16a-16c) has a peripheral interface (62) that is intended and designed to send and receive data packets via a data line connected to the peripheral interface (62);
if one of the interrogated expansion modules (16a-16c) has a peripheral interface (62) that is intended and
designed to send and receive data packets via a data line connected to the peripheral interface (62), to interrogate the peripheral interface (62) with regard to devices (32, 34) with which data can be interchanged by means of the sending and/or receiving of data packets by way of the peripheral interface (62); and
to store device information about the devices (32, 34) with which data can be interchanged by means of the sending and/or receiving of data packets by way of the peripheral interface (62) in the data structure.

8. System (10) according to Claim 7, wherein the system (10) is further designed so as, during operation:
to send state information with regard to analogue or
digital signals received on one or more of the peripheral interfaces (48, 60) to one or more receivers (28b, 30, 38); and
to control current and/or voltage levels applied to one or more of the peripheral interfaces (50, 60) on the basis of received control information.

9. System (10) according to Claim 8, wherein the system (10) is further designed to receive information about the one or more receivers (28b, 30, 38) of the state information from the configuration device (40).

10. System (10) according to one of Claims 7 to 9, wherein the system (10) is further designed:
to interrogate a network (12) with regard to network devices (38, 40, 76, 78) with which the system (10) can interchange data by means of the sending and/or receiving of data packets;
to identify one of the network devices (38, 40, 76, 78) as the configuration device (40); and
to transmit the data structure to the configuration device (40), by means of data packets sent to the configuration device (40).

11. System (10) according to one of Claims 7 to 10, wherein the device information comprises unique identifications and/or addresses of the devices (32, 34) .

12. System (10) according to one of Claims 7 to 11, wherein the basic module (14) and the first and second expansion modules (16a-16c) are connected by way of a bus system and the requested description data comprise addresses of the expansion modules (16a-16c) or positions of the expansion modules (16a-16c) in a logical ring topology formed by the basic module (14) and the expansion modules (16a-16c).

## Revendications

1. Procédé d'initialisation d'un système (10) qui comprend un module de base (14) et un premier et un deuxième module d'extension (16a à 16c), le premier et le deuxième module d'extension (16a, 16b) étant couplés de manière électriquement amovible au module de base (14) et présentant respectivement une ou plusieurs interfaces périphériques électriques (48, 50, 60), le procédé comprenant :
l'exécution d'une routine d'initialisation par le système (10), la routine d'initialisation comprenant :
l'interrogation du premier et du deuxième module d'extension (16a à 16c) quant à des données de description ;
la mémorisation d'une structure de données qui comprend les données de description interrogées ; et
la fourniture de la structure de données à un dispositif de configuration (40) ;
**caractérisé en ce que** les données de description comprennent des données caractéristiques des interfaces périphériques électriques (48, 50, 60) et une identification du premier et du deuxième module d'extension (16a à 16c) ; et
le procédé comprend en outre :
la vérification si l'un des modules d'extension interrogés (16a à 16c) dispose d'une interface périphérique (62) qui est prévue et aménagée pour envoyer et recevoir des paquets de données par une ligne de données reliée à l'interface périphérique (62) ;
si l'un des modules d'extension interrogés (16a à 16c) dispose d'une interface périphérique (62) qui est prévue et aménagée pour envoyer et recevoir des paquets de données par une ligne de données reliée à l'interface périphérique (62), l'interrogation de l'interface périphérique (62) quant à des appareils (32, 34) qui permettent d'échanger des données par l'intermédiaire de l'interface périphérique (62) au moyen de l'envoi et/ou de la réception de paquets de données ; et
la mémorisation, dans la structure de données, d'informations d'appareil concernant les appareils (32, 34) qui permettent d'échanger des données par l'intermédiaire de l'interface périphérique (62) au moyen de l'envoi et/ou de la réception de paquets de données.

2. Procédé d'initialisation d'un système (10) selon la revendication 1, comprenant en outre :
l'exécution d'une routine de configuration par le dispositif de configuration (40), la routine de configuration comprenant :
la définition d'un ou de plusieurs récepteurs (28b, 30, 38) d'informations d'état, les informations d'état faisant référence à des signaux analogiques ou numériques qui sont reçus par l'intermédiaire d'une ou de plusieurs interfaces périphériques (48, 50, 60) ; et
la définition d'un ou de plusieurs émetteurs (28a, 32, 34, 38) d'informations de commande, les informations de commande faisant référence à des signaux analogiques ou numériques qui sont à envoyer par l'intermédiaire d'une ou de plusieurs des interfaces périphériques (48, 50, 60).

3. Procédé d'initialisation d'un système (10) selon la revendication 2, comprenant en outre :
l'exécution d'une routine de fonctionnement par le système (10), la routine de fonctionnement comprenant :
l'envoi des informations d'état audit un ou aux plusieurs récepteurs définis (28b, 30, 38) ; et
la réception des informations de commande dudit un ou des plusieurs émetteurs définis (28a, 32, 34, 38), et la commande de niveaux de courant et/ou de tension qui sont appliqués à une ou plusieurs des interfaces périphériques (48, 50, 60), sur la base des informations de commande.

4. Procédé d'initialisation d'un système (10) selon l'une quelconque des revendications 1 à 3, comprenant en outre :
l'interrogation d'un réseau (12) quant à des appareils de réseau (38, 40, 76, 78) avec lesquels le système (10) peut échanger des données au moyen d'un envoi et d'une réception de paquets de données ; et
l'identification d'un des appareils de réseau (38, 40, 76, 78), au moyen de l'envoi et/ou de la réception de paquets de données, comme dispositif de configuration (40) ;
la fourniture de la structure de données au dispositif de configuration (40) comprenant une transmission de la structure de données au dispositif de configuration (40) au moyen de l'envoi de paquets de données au dispositif de configuration (40).

5. Procédé d'initialisation d'un système (10) selon l'une quelconque des revendications 1 à 4, dans lequel les informations d'appareil comprennent des identifications univoques et/ou des adresses et/ou des informations concernant des entrées et sorties numériques et/ou analogiques des appareils (32, 34).

6. Procédé d'initialisation d'un système (10) selon l'une quelconque des revendications 1 à 5, dans lequel le module de base (14) et le premier et le deuxième module d'extension (16a à 16c) sont reliés par un système de bus, et les données de description interrogées comprennent des adresses du premier et du deuxième module d'extension (16a à 16c).

7. Système (10), comprenant :
un module de base (14) qui présente une unité centrale (20), une mémoire (22) et une interface de bus de terrain (26) ; et
un premier et un deuxième module d'extension (16a, 16b) qui sont couplés de manière électriquement amovible au module de base (14) et présentent respectivement une ou plusieurs interfaces périphériques électriques (48, 50, 60) ;
le système (10) étant aménagé pour exécuter une routine d'initialisation et dans le cadre de la routine d'initialisation pour :
interroger le premier et le deuxième module d'extension (16a à 16c) quant à des données de description ;
mémoriser une structure de données qui comprend les données de description interrogées ; et
fournir la structure de données d'un dispositif de configuration (40) ;
**caractérisé en ce que** les données de description comprennent des données caractéristiques des interfaces périphériques électriques (48, 50, 60) et une identification du premier et du deuxième module d'extension (16a à 16c) ; et
le système (10) est en outre aménagé pour :
vérifier si l'un des modules d'extension interrogés (16a à 16c) dispose d'une interface périphérique (62) qui est prévue et aménagée pour envoyer et recevoir des paquets de données par une ligne de données reliée à l'interface périphérique (62) ;
si l'un des modules d'extension interrogés (16a à 16c) dispose d'une interface périphérique (62) qui est prévue et aménagée pour envoyer et recevoir des paquets de données par une ligne de données reliée à l'interface périphérique (62), interroger l'interface périphérique (62) quant à des appareils (32, 34) qui permettent d'échanger des données par l'intermédiaire de l'interface périphérique (62) au moyen de l'envoi et/ou de la réception de paquets de données ; et
mémoriser dans la structure de données des informations d'appareil concernant les appareils (32, 34) qui permettent d'échanger des données par l'intermédiaire de l'interface périphérique (62) au moyen de l'envoi et/ou de la réception de paquets de données.

8. Système (10) selon la revendication 7, dans lequel le système (10) est en outre aménagé en cours de fonctionnement pour :
envoyer à un ou plusieurs récepteurs (28b, 30, 38) des informations d'état concernant des signaux analogiques ou numériques reçus au niveau d'une ou de plusieurs des interfaces périphériques (48, 60) ; et
commander un niveau de courant et/ou de tension appliqué à une ou plusieurs des interfaces périphériques (50, 60) sur la base d'informations de commande reçues.

9. Système (10) selon la revendication 8, le système (10) étant en outre aménagé pour recevoir des informations concernant ledit un ou les plusieurs récepteurs (28b, 30, 38) des informations d'état du dispositif de configuration (40).

10. Système (10) selon l'une quelconque des revendications 7 à 9, dans lequel le système (10) est en outre aménagé pour :
interroger un réseau (12) quant à des appareils de réseau (38, 40, 76, 78) avec lesquels le système (10) peut échanger des données au moyen de l'envoi et/ou de la réception de paquets de données ;
identifier l'un des appareils de réseau (38, 40, 76, 78) comme dispositif de configuration (40) ; et
transmettre la structure de données au dispositif de configuration (40) au moyen de paquets de données envoyés au dispositif de configuration (40).

11. Système (10) selon l'une quelconque des revendications 7 à 10, dans lequel les informations d'appareil comprennent des identifications univoques et/ou des adresses des appareils (32, 34).

12. Système (10) selon l'une quelconque des revendications 7 à 11, dans lequel le module de base (14) et le premier et le deuxième module d'extension (16a à 16c) sont reliés par un système de bus, et les données de description interrogées comprennent des adresses des modules d'extension (16a à 16c) ou des positions des modules d'extension (16a à 16c) dans une topologique annulaire logique qui est formée par le module de base (14) et les modules d'extension (16a à 16c) .
